# EUROPEAN PATENT APPLICATION

(11) **EP 3 646 737 A1**
(43) Date of publication of application: **06.05.2020**
(21) Application number: 18824507.0
(22) Date of filing: 03.04.2018
(51) Int. Cl.: A23L 7/10

(54) **METHOD FOR PRODUCING RICE GEL**

(30) Priority: 30.06.2017 JP 2017128661
(71) Applicant: Yanmar Co., Ltd., Osaka-shi, Osaka 530-0013 (JP)
(72) Inventor: TSUCHIYA Kuniyasu, Osaka-shi Osaka 530-0013 (JP)
(74) Representative: dompatent von Kreisler Selting Werner - Partnerschaft von Patent- und Rechtsanwälten mbB
(86) International application number: PCT/JP2018/014332
(87) International publication number: WO 2019/003547

(57) **Abstract**

The present invention provides a method for producing a rice gel, which can produce a quality rice gel at low cost, while adopting a rational production facility that enables mass production. The method of the present invention for producing a rice gel includes: a water addition step 21 of adding water W to raw rice bran M to obtain a rice bran slurry S1 in a slurry-like form, the raw rice bran M being rice bran obtained by milling raw rice and excluding at least red rice bran; and a pulverization step 22 of pulverizing the rice bran slurry S1 to obtain a gelatinous rice gel RG.

## Description

### Technical Field

The present invention relates to a method for producing a rice gel.

### Background Art

In recent years, rice flour produced from polished rice ground by a milling apparatus is widely used as an ingredient for, for example, rice flour bread (e.g., see Patent Literature 1; hereinafter, PTL 1). However, there is a problem in such rice flour that its taste cannot be maintained for a long period of time due to betaization (retrogradation) of starch taking place in a short time.

Under the circumstance, a rice gel has been collecting attentions as an alternative to the rice flour, because the rice gel can maintain its taste for a relatively long period of time, and is easier to handle. As a traditional method for producing such a rice gel, there is a known method in which polished rice or rice flour is heated with water added thereto to yield a gel-like gelatinized product, and then this gelatinized product is mechanically agitated to turn into a rice gel (e.g., see Patent Literature 2; hereinafter PTL 2).

### Citation List

### Patent Literature

PTL 1: Japanese Patent Application Laid-Open No. 2006-136255
PTL 2: International Publication No. 2014/199961

### Summary of Invention

### Technical Problem

The above-described traditional method for producing a rice gel however has a problem of an increase in the raw material cost, which is attributed to the use of milled polished rice or rice flour produced by grinding the polished rice, as a raw material. Further, because the method requires a heat treatment such as cooking or steaming of polished rice or the like, a large-scale production facility is needed. These issues lead not only to a problem of a limited production volume but also to a problem of an increase in the production cost, consequently hindering rice gels from becoming popular.

In view of the above circumstances, it is a main object of the present invention to provide technology that can produce a quality rice gel at low cost, while adopting a rational production facility that enables mass production.

### Solution to Problem

A first aspect of the present invention includes: a water addition step of obtaining a rice bran slurry in a slurry-like form, by adding water to raw rice bran, the raw rice bran being rice bran obtained by milling raw rice and excluding at least red rice bran; and
a pulverization step of pulverizing the rice bran slurry to obtain a gelatinous rice gel.

The inventor of the present invention found that, of the rice bran obtained by milling the raw rice, the rice bran excluding the red rice bran containing husks and the like rich in oil (protein), contains a large amount of alpharized (gelatinized) starch after subjected to friction heat at the time of milling rice. The present invention was accomplished based on this finding.

That is, with the above-described configuration, a gelatinous rice gel rich in alpharized starch can be easily produced simply by adding water to the raw rice bran, which excludes at least the red rice bran, in the water addition step to obtain the rice bran slurry, and applying a high-speed shear force to the rice bran slurry to pulverize the same in the pulverization step. Further, friction heat added to the rice bran slurry at the time of pulverization in the pulverization step sufficiently progresses the alpharization of the starch, and hence a quality rice gel with suitable viscoelasticity can be produced.

Further, since the raw rice bran is available at low cost, the raw material cost can be kept low. Further, mass production is possible because no heat treatment such as rice cooking or steaming is necessary. Therefore, the production cost can be further reduced.

Hence, the present invention can provide a method for producing a rice gel, which can produce a quality rice gel at low cost, while adopting a rational production facility that enables mass production.

A second aspect of the present invention is such that the raw rice bran is rice bran of Sake-brewing rice.

With the above configuration, the raw rice bran for a rice gel can be obtained simply by sorting and removing the red rice bran from rice bran of Sake-brewing rice which is a byproduct of a milling process in *Sake* brewing. This way, the raw material cost can be significantly reduced, and the rice gel can be produced at further-reduced cost.

A third aspect of the present invention is such that the raw rice bran is *Gin*-rice bran.

The configuration using the *Gin*-rice bran as the raw rice bran can more stably produce a rice gel with higher quality, as compared to a case of using other types of rice bran as the raw rice bran.

A fourth aspect of the present invention is such that, in the pulverization step, the rice bran slurry is pulverized by using a stone-mill type grinding apparatus.

With the configuration, the stone-mill type grinding apparatus can be suitably used in the pulverization step, as an apparatus for pulverizing the rice bran slurry. That is, in the stone-mill type grinding apparatus, the rice bran slurry passes a gap between an upper mill unit and a lower mill unit which rotate relatively to each other. With a shear force generated as the rice bran slurry passes the gap, the rice bran slurry can be pulverized. Further, suitable friction heat is applied to the rice bran slurry passing through the gap between the upper mill unit and the lower mill unit. This progresses a favorable alpharization of starch, and a rice gel with further improved quality can be produced.

A fifth aspect of the present invention is such that the pulverization step includes: a rough-pulverization step of roughly pulverizing the rice bran slurry; and a fine pulverization step of more finely pulverizing the rice bran slurry than the rough-pulverization step, the rice bran slurry having been pulverized in the rough-pulverization step.

With this configuration, the rice bran slurry is pulverized in the pulverization step through multiple stages that are the rough-pulverization step and the fine pulverization step. This can increase the throughput and more finely pulverize the rice bran slurry in the fine pulverization step of the posterior stage, as compared to a case of pulverizing in a single step. Hence, a rice gel with a further improved quality can be produced.

### Brief Description of Drawings

[FIG. 1] A flowchart showing a flow in a method for producing a rice gel.
[FIG. 2] A longitudinal cross-sectional view showing a schematic structure of a stone-mill type grinding apparatus used in a pulverization step.
[FIG. 3] An explanatory diagram for explaining types of rice bran.

### Description of Embodiments

The following describes, with reference to attached drawings, an embodiment of a method for producing a rice gel, according to the present invention.

It should be noted that the method for producing a rice gel described in the present embodiment does not limit the scope of the present invention. The method for producing a rice gel described in this embodiment is, for example, a method assuming production of a rice gel by a rice gel production company engaged in production of rice gel, by using as an ingredient rice bran obtained at relatively low cost from a brewing company engaged in brewing Japanese *Sake.*

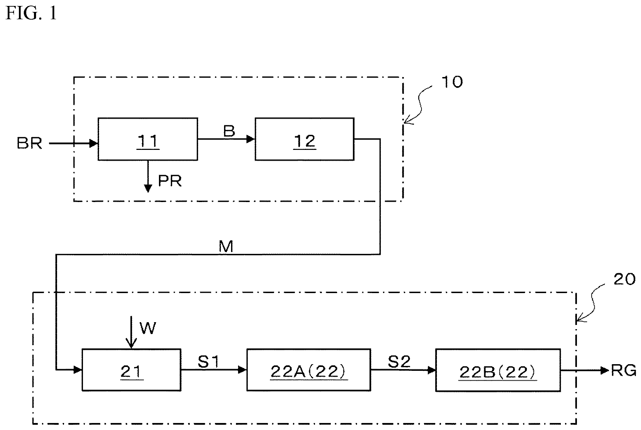

As shown in FIG. 1, a facility 10 installed in a brewing company performs: a milling step 11 of using a known milling apparatus (not-shown) to mill raw rice BR such as husked rice to produce *Sake*-brewing rice PR to be used as a raw material for Japanese *Sake*; and a sorting step 12 of sorting rice bran B obtained as a byproduct of the milling step 11 into multiple types.

In this sorting step 12, the rice bran B is sorted into multiple types based on the output timing from the milling apparatus. That is, the rice bran B output at an anterior stage of the milling step 11 is sorted as red rice bran or *Tora*-rice bran. The rice bran B output at an intermediate stage of the milling step 11 is sorted as medium-rice bran. The rice bran B output at a posterior stage of the milling step 11 is sorted as white bran. It should be noted that the timing for sorting the rice bran in the sorting step 12 can be suitably set in accordance with the state and the like of the rice bran generated.

The medium-rice bran sorted in the sorting step 12 is delivered to a rice gel producing company and used as raw rice bran M that is a raw material of a rice gel RG.

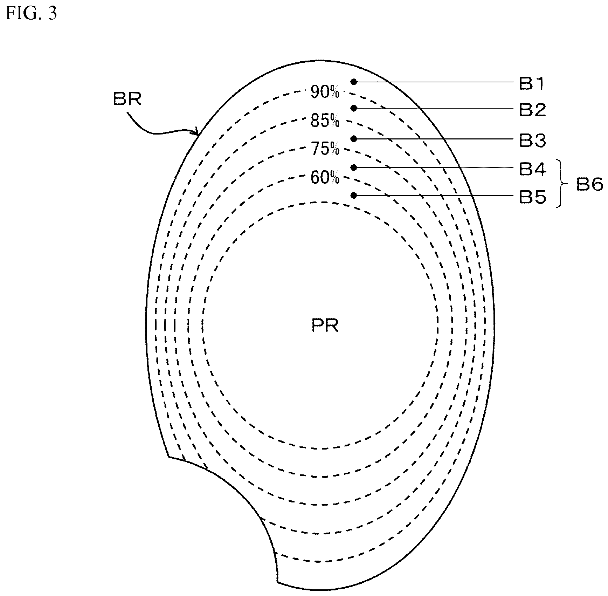

Herein, the types of rice brans are defined as shown in FIG. 3. Namely, the red rice bran B1 refers to a byproduct of rice milling process at a rice polishing ratio (weight ratio of post-milling polished rice PR with respect to the raw rice BR) of 91% or higher. The *Tora*-rice bran B2 refers to a byproduct of rice milling process at a rice polishing ratio of 82% or higher but not more than 91%. The medium-rice bran B3 refers to a byproduct of rice milling process at a rice polishing ratio of 70% or higher but not more than 82%. The high-rice bran B4 refers to a byproduct of rice milling process at a rice polishing ratio of 60% or higher but not more than 70%. The *Gin*-rice bran B5 refers to a byproduct of rice milling process at a rice polishing ratio of less than 60%. Further, the high-rice bran B4 and the *Gin*-rice bran B5 may be collectively referred to as white bran.

As shown in FIG. 1, a facility 20 installed in the rice gel producing company side performs a water addition step 21 of adding freshwater W to the raw rice bran M to obtain rice bran slurry S1 in a slurry-like form. More specifically, in the water addition step 21, the raw rice bran M and the fresh water W are mixed by using a known mixing apparatus (not shown) until the mixture turns into a slurry-like form, and the mixture in the slurry-like form is output as the rice bran slurry S1.

The raw rice bran M is bran excluding the red rice bran (B1 of FIG. 3) and *Tora-*rice bran (B2 in FIG. 3) containing husks rich in oil (protein). The raw rice bran M is rich in starch alpharized (gelatinized) by friction heat added during milling in the milling step 11.

Next, a pulverization step 22 is performed to obtain a gelatinous rice gel RG by pulverizing the rice bran slurry S1 obtained in the water addition step 21. More specifically, to the rice bran slurry S1 generated in the water addition step 21, a high-speed shear force is applied to pulverize the rice bran slurry S1, and friction heat at the time of pulverization is applied to the rice bran slurry S1 in the pulverization step 22. This sufficiently progresses alpharization of starch contained in the rice bran slurry S1, thus producing a quality rice gel RG having suitable viscoelasticity. The rice gel RG thus produced is divided into appropriate amounts, packaged, and shipped as products. A conveyor device is used as needed for transferring the rice bran slurry S1, S2, and the rice gel RG. The conveyor device can be a screw pump such as a mohnopump suitable for conveyance of viscoelastic fluid, although illustration is omitted here.

The pulverization step 22 includes a rough-pulverization step 22A of an anterior stage and a fine pulverization step 22B of a posterior stage, and is configured to pulverize the rice bran slurry S1 in two stages. That is, in the rough-pulverization step 22A of the anterior stage, the rice bran slurry S1 generated by the water addition step 21 is roughly pulverized to generate roughly-pulverized rice bran slurry S2. Then, in the fine pulverization step 22B of the posterior stage, the rice bran slurry S2 having been roughly pulverized in the rough-pulverization step 22A is pulverized more finely than the rough-pulverization step 22A to generate a rice gel RG.

By pulverizing the rice bran slurry S1 generated in the water addition step 21 in the pulverization step 22 including two stages, a load for pulverization in each of the pulverization steps (22A, 22B) is reduced. This increases throughput as compared with pulverization in a single-staged pulverization step. Further, since the rice bran slurry S2 is further finely pulverized in the fine pulverization step 22B of the posterior stage, a rice gel RG with better quality is produced.

Although the details are omitted, a pulverizing apparatus such as a known cutter mill is used in the above rough-pulverization step 22A for the purpose of efficiently and roughly pulverizing the rice bran slurry S1 in which relatively large pieces of rice bran remain.

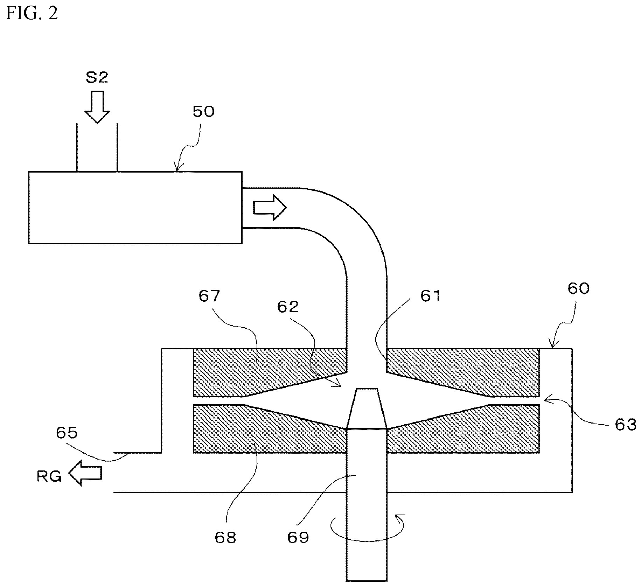

On the other hand, a known stone-mill type grinding apparatus 60 as shown in FIG. 2 is used in the above fine pulverization step 22B, for the purpose of stably and finely pulverizing the roughly pulverized rice bran slurry S2. The structure of the stone-mill type grinding apparatus 60 is described below.

The grinding apparatus 60 includes a disc-shaped upper mill unit 67 and a disc-shaped lower mill unit 68 which are arranged up and down, and is configured so that the rice bran slurry S2 passes through a gap 63 formed between an under surface of the upper mill unit 67 and a top surface of the lower mill unit 68, while the upper mill unit 67 and the lower mill unit 68 are rotating relatively to each other. This way, the rice bran slurry S2 is finely pulverized. More specifically, in a center portion of the lower mill unit 68, a rotation drive shaft 69 driven and rotated by a motor (not shown) is fixed. By driving and rotating the rotation drive shaft 69, the lower mill unit 68 rotates relatively to the upper mill unit 67 which is fixed in a stationary state.

The rice bran slurry S2 before being processed, which is conveyed by the screw pump 50 such as a mohnopump, is input to an input space 62 formed nearby the center of the gap 63 through an inlet 61 formed in the center portion of the upper mill unit 67. The rice bran slurry S2 input to the input space 62 is pushed outwardly by rotation drive of the lower mill unit 68 and passes through the gap 63. The rice bran slurry S2 passing the gap 63 is given a shear force by the relative rotation of the lower mill unit 68 with respect to the upper mill unit 67 and finely pulverized to turn into a rice gel RG, and falls from the outer side of the gap 63. The rice gel RG is then fed outside through an outlet port 65.

Since the rice bran slurry S2 is finely pulverized by such a grinding apparatus 60, suitable friction heat is applied to the rice bran slurry S2 when the rice bran slurry S2 passes through the gap 63 between the upper mill unit 67 and the lower mill unit 68. This favorably progresses alpharization of starch contained in the rice bran slurry S2, thus producing a rice gel RG with further improved quality.

For each type of rice bran used as the raw rice bran M, the quality of the rice gel produced through the above method for producing a rice gel was evaluated. This is described hereinbelow.

In this example, a rice gel was produced from the raw rice bran through the steps as described below.
(1) Water addition step: raw rice bran and water were supplied into a pot and were mixed for three minutes by using a spatula to obtain a rice bran slurry. In this case, the raw rice bran was 3.75 kg and water mixed with it was 7.5 kg.
(2) Pulverization step: the rice bran slurry obtained in the water addition step was pulverized by using a stone-mill type grinding apparatus (Masscolloider produced by MASUKO SANGYO CO., Ltd.) to obtain a rice gel. In the grinding apparatus used in this case, a gap width which is the width of a gap between an under surface of an upper mill unit and a top surface of a lower mill unit was set to 220 µm.
(3) Packing/sterilization step: a predetermined amount of the rice gel obtained in the above pulverization step was loaded into a bag made of a resin film and vacuum-packed, heated for 20 minutes for sterilization, and then cooled for 20 minutes.

Through the above steps, the following rice gel samples were produced in this test: a sample obtained by using *Gin*-rice bran (rice bran obtained with a rice polishing ratio of less than 60%) as the raw rice bran (the sample is hereinafter referred to as *Gin*-rice bran gel); a sample obtained by using high-rice bran (rice bran obtained with a rice polishing ratio of 60% or higher but less than 70%) as the raw rice bran (the sample is hereinafter referred to as high-rice bran gel); and a sample obtained by using medium-rice bran (rice bran obtained with a rice polishing ratio of 70% or higher but less than 82%) as the raw rice bran (the sample is hereinafter referred to as medium-rice bran gel). Each of these rice gel samples was subjected to a test for evaluating the quality as a rice gel, in which test the viscosity, the water content, and the functionality (the exterior appearance, the luster, the flavor, the texture, and the like) were evaluated, for example.

The following describes the results of the tests on the samples.

### (Gin-rice bran gel)

A favorable gelatinous rice gel was produced, when the rice gel was produced through the above-described steps using *Gin*-rice bran of approximately one month after the time of milling. The *Gin*-rice bran gel produced as described above maintained a viscosity of 97.4 Pa·s and a water content of 64.1%, and was confirmed to maintain a favorable gelatinous state, even after elapse of approximately 70 days from the time of production.

Meanwhile, a very favorable gelatinous rice gel with a viscosity of 160.0 Pa·s and a water content of 69.3% was produced, even when the rice gel was produced through the above-described steps using *Gin*-rice bran of approximately three months after the time of milling. The *Gin*-rice bran gel produced as described above maintained a viscosity of 92.2 Pa·s, and was confirmed to maintain a favorable gelatinous state, even after elapse of approximately 15 days from the time of production.

Further, as a result of having a plurality of evaluators actually eat the *Gin*-rice bran gel and evaluate its functionality, the *Gin*-rice bran gel was recognized to be highly viscous and smooth, while a slight rice bran flavor and a slight change in the color were observed.

### (High-rice bran gel)

A favorable gelatinous rice gel was produced, when the rice gel was produced through the above-described steps using high-rice bran of approximately one month after the time of milling. The high-rice bran gel produced as described above maintained a viscosity of 83.5 Pa·s and a water content of 70.0%, and was confirmed to maintain a favorable gelatinous state, even after elapse of approximately 70 days from the time of production.

Further, it is confirmed that a favorable gelatinous rice gel was not produced, when the rice gel was produced through the above-described steps using high-rice bran of approximately three months after the time of milling.

### (Medium-rice bran gel)

A gelatinous rice gel with a favorable viscosity and a favorable water content was produced, when the rice gel was produced through the above-described steps using medium-rice bran of approximately one month after the time of milling. The medium-rice bran gel produced as described above did not maintain its gelatinous form after elapse of approximately 70 days from the time of production.

Further, it is confirmed that a favorable gelatinous rice gel was not produced, when the rice gel was produced through the above-described steps using medium-rice bran of approximately three months after the time of milling.

### <Another Embodiment>

The following describes another embodiment of the present invention. It should be noted that the configurations of the embodiments described below are not limited to being applied individually, and can be applied in combination with one another, provided that there is no contradiction.
(1) In the above embodiment, the pulverization step 22 includes a rough-pulverization step 22A of an anterior stage and a fine pulverization step 22B of a posterior stage, and is configured to pulverize the rice bran slurry S1 in two stages. The present invention, however, is not limited to this. The pulverization step may be configured to pulverize the rice bran slurry S1 through a single stage or through three or more stages. Further, in the above embodiment, the rice bran slurry S1 is roughly pulverized in the rough-pulverization step 22A, by using a pulverizing apparatus such as a cutter mill. The present invention, however, is not limited to this. The rough-pulverization step 22A may also adopt the grinding apparatus 60 as shown in FIG. 2 to pulverize the rice bran slurry S1. Further, this grinding apparatus 60 may be suitably modified to another type of pulverizing apparatus.
(2) The above embodiment uses, as the raw rice bran M to be an ingredient of a rice gel RG, rice bran generated at a time of milling raw rice BR to produce Sake-brewing rice which is used as an ingredient of Japanese *Sake.* The present invention, however, is not limited to this. The raw rice bran may be rice bran other than a byproduct of producing *Sake*-brewing rice.
(3) The above embodiment uses, as the raw rice bran M to be an ingredient of rice gel RG, *Gin*-rice bran (B5 of FIG. 3) out of rice bran obtained by milling raw rice. The present invention, however, is not limited to this. Used as the raw rice bran may be any one of, or any combination of, types of rice bran other than red rice bran, namely, *Tora*-rice bran, medium-rice bran, high-rice bran, and *Gin*-rice bran. For example, rice bran containing *Gin*-rice bran and rice bran not containing *Gin*-rice bran may be used as the raw rice bran. Examples of the rice bran containing *Gin*-rice bran include: white bran which is a combination of *Gin*-rice bran and high-rice bran; and a combination of this white rice bran with medium-rice bran and/or with *Tora*-rice bran. Examples of the rice bran not containing *Gin*-rice bran include high-rice bran and medium-rice bran.

### Industrial Applicability

The present invention can be applied to a method for producing a rice gel.

### Reference Signs List

- 21: water addition step
- 22: pulverization step
- 22A: rough-pulverization step
- 22B: fine pulverization step
- 60: grinding apparatus
- B1: red rice bran
- B5: *Gin*-rice bran
- BR: raw rice
- M: raw rice bran
- RG: rice gel
- S1, S2: rice bran slurry
- W: water

## Claims

1. A method for producing a rice gel, comprising:
a water addition step of obtaining a rice bran slurry in a slurry-like form, by adding water to raw rice bran, the raw rice bran being rice bran obtained by milling raw rice and excluding at least red rice bran; and
a pulverization step of pulverizing the rice bran slurry to obtain a gelatinous rice gel.

2. The method according to claim 1, wherein the raw rice bran is rice bran from *Sake-*brewing rice.

3. The method according to claim 1 or 2, wherein the raw rice bran is *Gin*-rice bran.

4. The method according to any one of claims 1 to 3, wherein, in the pulverization step, the rice bran slurry is pulverized by using a stone-mill type grinding apparatus.

5. The method according to any one of claims 1 to 4, wherein, the pulverization step includes: a rough-pulverization step of roughly pulverizing the rice bran slurry; and a fine pulverization step of more finely pulverizing the rice bran slurry than the rough-pulverization step, the rice bran slurry having been pulverized in the rough-pulverization step.
